# EUROPEAN PATENT SPECIFICATION

(11) **EP 2 964 448 B1**
(45) Date of publication and mention of the grant of the patent: **27.05.2020**
(21) Application number: 14707191.4
(22) Date of filing: 28.02.2014
(51) Int. Cl.: B29C 64/124, B29C 64/245, B33Y 10/00, B33Y 30/00, B29C 64/386, B33Y 50/00

(54) **METHOD AND DEVICE FOR PRODUCING OBJECTS BY STEREOLITHOGRAPHY**
VERFAHREN UND VORRICHTUNG ZUR HERSTELLUNG VON OBJEKTEN MITTELS STEREOLITHOGRAFIE
PROCÉDÉ ET DISPOSITIF DESTINÉS À LA PRODUCTION D'OBJETS PAR STÉRÉOLITHOGRAPHIE

(30) Priority: 04.03.2013 IT GE20130027
(43) Date of publication of application: 13.01.2016
(73) Proprietor: Smart3D.net di Dotta Andrea E Gie' Andrea SNC, 15048 Valenza (AL) (IT)
(72) Inventor: DOTTA, Andrea, I-15048 Valenza (AL) (IT); GIE', Andrea Francesco, I-15048 Valenza (AL) (IT)
(74) Representative: Karaghiosoff, Giorgio Alessandro
(86) International application number: PCT/EP2014/053985
(87) International publication number: WO 2014/135464

(56) References cited:
- JP-A- H06 246 838
- US-A1- 2008 174 050
- US-A1- 2009 020 901

## Description

The present invention relates to a method for producing objects by a stereolithography device, according to claim 1.

The stereolithography device comprises at least one vat inside which there is provided a resin intended to be solidified by a curing process, by projecting an image obtained by a light radiation on the bottom of the vat, generated by a source arranged under the vat.

There is provided an adhesion platform placed in contact with the resin, such to form a first layer of cured material adherent to the platform, there being further provided means for moving the platform, intended to move it away/to approach it with respect to the bottom of the vat, such to form the next layers of cured material.

The method provides the following steps:
a) placing the platform at a distance from the bottom of the vat equal to the thickness of the layer of the resin to be cured,
b) generating the light radiation, irradiating the resin with it and consequently curing the resin layer,
c) moving the platform away from the bottom of the vat and detaching the layer of cured resin from the bottom of said vat,
d) forming the following layer of cured resin.

The one just described is the common process by means of which three-dimensional objects are obtained by using stereolithography devices, which provide a resin to be solidified according to a mechanism for the solidification thereof by using the energy emitted by a light radiation.

The light radiation is emitted by a projector that projects the image on the resin to be solidified, particularly the section of the 3D image desired to be obtained, the desired object is obtained by repeating the process layer by layer.

The solidified resin has a behavior similar to the glue, therefore it adheres to the platform and to the bottom of the vat, therefore the problem is to make the smallest effort for detaching the layer just formed from the bottom of the vat.

Such problem is present not only when making the first layer, where the resin is bonded to the platform and to the bottom of the vat, but also for the following layers, where the resin is bonded to the layer that has been made previously and to the bottom of the vat.

Therefore the fact of detaching the resin from the bottom of the vat is a crucial step for properly producing the objects by stereolithography, which is further more important since such step is repeated many times when producing the objects.

The devices known in the prior art use a slow and gradual movement of the platform for detaching the cured resin without breaking it.

However such solution has several drawbacks, firstly it makes the process for detaching and forming the objects too much time-consuming and moreover there is the risk of elastically deforming or even plastically deforming the material, which inevitably do not allow the desired object to be properly built.

Document US 2009/0020901 describes a method and a device according to the preamble of claims 1 and 8. Document US 2008/0174050 describes a stereolithography method and device.

Therefore there is the unsatisfied need of providing a method and a device for producing an object by stereolithography solving the drawbacks of known prior art devices and methods.

The present invention achieves the above aims by providing a method for producing objects by a stereolithography device as described before, wherein the speed with which the platform moves away/approaches is variable and it does not take null values.

Moreover such speed is calculated depending on the amount of resin to be cured and depending on the size of the resin layer to be cured.

Thus the time necessary for detaching the cured resin from the bottom of the vat is dictated by the amount of cured resin, therefore it will be possible to optimize the production time on the basis of the dimensions of the object, by changing the time for detaching the resin also on the basis of the layer under curing.

As it will be clear from the description below, the amount is not the only important factor for adjusting the speed with which the platform moves away, but also the distribution of the cured resin is an important aspect for adjusting the time for detaching the resin from the bottom of the vat.

According to the invention, step c) for moving away the platform provides three steps:
c1) first moving away of the platform with respect to the bottom of the vat,
c2) second moving away of the platform with respect to the bottom of the vat,
c3) approaching of the platform with respect to the bottom of the vat for forming the next layer.

The passage from one step to another one is obtained by changing the speed with which the platform moves away from/approaches the bottom of the vat, such that the platform is kept in movement during all the three steps.

Since the problem is to exert the smallest effort for detaching the layer from the bottom of the vat, the method of the present invention provides to solve this problem by means of the three steps described, which are performed in succession never providing pauses in the movement of the platform, but by simply providing changes in the speed which never take null values.

This has an immediate improvement in the performance of the system, the change of the speed allows the resin to be accurately detached from the bottom of the vat without the need of excessively increasing the process time due to slow and constant speeds and to the use of pauses of the platform, as described in the method known in the prior art.

Such arrangement allows the cured resin to be prevented from being subjected to elastic and permanent changes, a first light quick movement is made for pre-tensioning the cured resin and later a second movement causes the resin to be detached from the bottom of the vat.

Moreover the steps of the method just described promote the detachment of a great layer area quickly and without stressing the material, therefore opting for releases which are controlled as regards intensity, duration and number.

Each step can provide a constant or variable speed, anyway the speed will be always calculated on the basis of specific parameters that will be shown below.

According to an improvement, the speed with which the platform moves away/approaches is calculated on the basis of solid areas and empty areas of the resin inside the layer.

One of the criteria for evaluating solid areas and empty areas is calculating the number of pixels of the image, since each pixel is a unit of measure, each pixel being associated to a covered area measurement.

Such aspect is particular advantageous since considering the same amount of cured resin, if the resin is distributed in a continuous and homogeneous manner in a single area it will require a detachment time that is different than the same amount of resin distributed on a wider area and in a non continuous manner.

To this end the solid areas and the empty areas are calculated, in particular the solid areas are identified, the distance between the centre of each solid area and its edge is measured for evaluating their dimensions.

Therefore also the distribution of the pixels is an important criterion for calculating the speed with which the platform moves away/approaches.

The distribution of the pixels obviously is a direct consequence of the shape of the layer to be cured, therefore the moving away/approach speed is also a function of the shape thereof.

It is known that the shapes similar to the circle are those shapes that offer more resistance to the detachment of the layer of cured resin from the bottom of the vat.

The speed with which the adhesion platform moves away/approaches for each layer therefore is calculated as a tabular function or by means of algorithms, that can have different parameters as the variables.

For example it is possible to provide the speed with which the platform moves away/approaches the bottom of the vat to be calculated on the basis of the characteristics of the light radiation emitted and/or of the characteristics of the resin to be cured and/or of the characteristics of the platform and/or of the characteristics of the projected image.

Therefore the function or algorithm that dynamically calculate the speed can receive one or more input variables, to be provided as an alternative or in combination.

Particularly the moving away/approach speed can be defined on the basis of a series of elements, some being fixed during the whole process for creating the 3D object, other ones change as the layer formation changes.

By way of example among the constant parameters it is possible to define the size of the platform, the flexibility of the platform and the type of material to be cured.

For the constant parameters it is possible to generate libraries, to be used with the algorithm, for the different materials such to easily set them at the beginning of the processing.

The parameters that change during the layer formation are those associated with the energy applied for curing the resin.

Among such variable parameters there is the energy applied for the curing and therefore the degree of resistance the resin offers against the detachment from the vat.

Such parameter is composed of:
a. degree of light intensity emitted by the light source (the greater the light intensity is the greater the effect on the material curing will be with the other parameters being equal and so a lower speed will be necessary for making the detachment more gradual)
b. time of the exposure to the light radiation (the greater the time is the grater the curing degree to which the material is subjected will be and therefore even in this case the speed will be reduced).
c. amount of cured material (the greater the amount to be cured is the greater the exerted force will be for the detachment and therefore the speed will have to be lower).

For calculating the amount of material to be cured for example it is possible to sum the RGB values of the grey of the lighted pixels during individual layer formation.

According to the method of the present invention the step of first moving away of the platform occurs by bending the platform about a bending point, such that the layer of cured resin begins to be detached in the area closest to the bending point.

The bending is a passive bending, due to the platform moving away from the bottom of the vat.

The platform has a shape and/or a thickness and/or a material that make it slightly flexible, such to be inclined and such to promote the opening of a detachment point, from which the detachment propagates to all the points of contact between the cured resin and the bottom of the vat.

In order to improve the detachment of the cured resin from the bottom of the vat and in order to optimize the production of stereolithography objects, the method of the present invention provides not only to adjust the movement of the platform, but also to modify the intensity of the light radiation.

Therefore according to a possible embodiment the step generating the light radiation provides the following steps:
b1) detecting the light intensity in specific areas
b2) interpolating the detected values
b3) making the intensity of the light radiation homogeneous in the projection area.

Such improvement allows a light intensity uniformity to be obtained in the whole projection area, which inevitably leads to a more controlled and regular curing of the resin, guaranteeing the same mechanical properties to the whole layer that has to be detached.

In order to further optimize such effect it is possible to choose a source having uniformity characteristics, such as for example a LED source instead of a source of the mercury-discharge lamp type, usually used in the devices known in the prior art.

Moreover according to a possible embodiment, the method of the present invention provides to change the projected image according to the following steps:
antialiasing the image,
detecting the pixels having grey values lower than the threshold values activating the curing,
increasing the grey value of said pixels to the value activating the curing,
increasing the grey value of the remaining pixels in a way corresponding to the increase in the previous step.

Such method steps are particularly advantageous since unlike what occurs to projected images a low grey value is anyway perceptible while it has no effects on the resin to be cured if it does not arrive to such minimum intensity threshold that activates the reaction.

It is specified that the threshold value for the activation of the curing changes on the basis of the material to be cured, that is on the basis of the nature of the resin and of its components.

The steps just described therefore do not relate to a simple re-scaling of the grey values of each pixel by a linear function that increases the grey values of each pixel correspondingly to the threshold value.

The re-scaling algorithm is not linear, since it has to set the grey values of the pixels that change from 0 to 255 in a scale from a specific value to 255, wherein the specific value is the threshold value of the curing.

Such method is particularly useful for all the images having different levels of grey, but as an alternative, in particular for black-and-white images, that is where the pixels do not have levels of grey, it is possible to provide the change of said projected image according to the following steps:
extracting the borders of the image,
analyzing at least one pixel belonging to said borders,
setting the grey value of said at least one pixel depending on the number of pixels placed beside it,
iteration for each pixel composing the border.

Even in this case a threshold for the activation of the curing is established, that is a base grey level and a function is established such to adjust the level of grey to be assigned to the pixel under examination.

Preferably the used function provides the following rule:
if the pixel under examination has only one pixel beside it, then its grey value is equal to the threshold value activating the curing,
if the pixel under examination has two pixels beside it, then its grey value is equal to the threshold value activating the curing + 1/3 of the difference between the grey value corresponding to the white and the threshold value activating the curing,
if the pixel under examination has three pixels beside it, then its grey value is equal to the threshold value activating the curing + 2/3 of the difference between the grey value corresponding to the white and the threshold value activating the curing.

The invention further relates to a stereolithography device according to claim 8, comprising at least one vat inside which there is provided a resin intended to be solidified by a curing process, by projecting an image obtained by a light radiation on the bottom of the vat generated by a source arranged under said vat.

The device of the present invention comprises an adhesion platform placed in contact with the resin, such to form a first layer of cured material adherent to said platform, there being provided means for moving the platform, intended to move away/approach it with respect to the bottom of the vat, such to form the next layers of cured material.

There is further provided an electronic control unit intended to control the operation of the movement means and of the source generating a light radiation.

The adhesion platform is supported by elastically yielding supporting means, such that the platform has a yielding property in the lifting direction depending on a predetermined force, that allows a flexible platform to be obtained, with the advantages described above.

According to a first embodiment the supporting means are composed of the material of the platform.

Therefore in this case the platform is composed at least partially of elastically yielding material.

The adhesion platform is composed of two elongated members arranged such to form a "L", of which a first elongated member arranged in a direction substantially perpendicular to the vat and a second elongated member arranged in a direction substantially parallel to the vat, to which second elongated member the layer of cured resin is attached, such that the platform provides at least one bending point in proximity of the corner area of the "L".

According to an improvement of the previous arrangement, the first elongated member is made integral with the second elongated member.

The particular shape and thickness of the material characterizing said "L" component allow a specific flexibility thereof to be obtained.

It is possible to provide the adhesion platform to have the second elongated member folded on itself, with a bending angle of 180°.

Moreover the two elongated members can be a single integral component, that is a single one-piece component bent such to identify a first and a second elongated members.

As an alternative the first elongated member and the second elongated member can be two distinct and separate members, joined together by any methods known in the prior art, such to make a "L", that allows an elastically yielding joint to be obtained between the two elongated members.

Finally a preferred variant embodiment provides the electronic control unit to comprise processing means for executing a logic programme, whose execution implies the stereolithography device of the present invention to operate by performing the steps of the method, it being an object of the present invention too, according to one or more of the characteristics described above.

These and other characteristics and advantages of the present invention will be more cleat from the following description of some embodiment shown in the annexed drawings wherein:
Fig.1 is a principle diagram of the stereolithography device for carrying out the method of the present invention, according to a possible embodiment;
Fig.2 is the chart relating to the method of the present invention;
Fig.3a and 3b are the embodiment of the platform belonging to the device of the present invention;
Figs. 4a and 4b are a possible embodiment of the platform belonging to the device of the present invention;
Figs. 5a and 5b are a possible embodiment of the method of the present invention;
Figs. 6a to 6c are a possible embodiment of the method of the present invention.

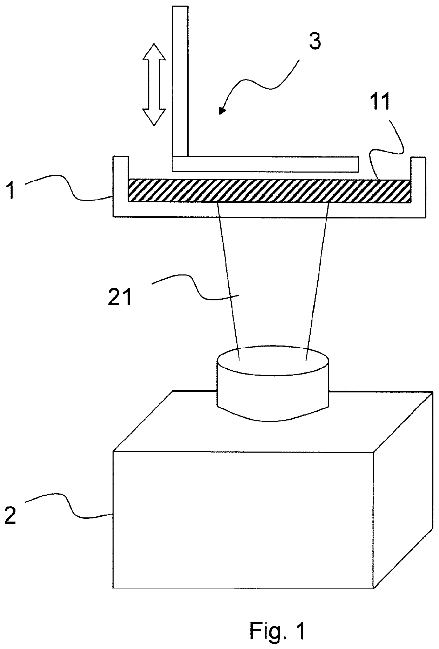

Figure 1 shows the stereolithography device for carrying out the method of the present invention.

The device comprises a vat 1 inside which there is provided a resin 11 intended to be solidified by a curing process, by projecting an image obtained by a light radiation 21 on the bottom of said vat 1, generated by a source 2 generating a light radiation arranged under the vat 1.

There is provided an adhesion platform 3 placed in contact with the resin 11 such to form a first layer of cured material adherent to the platform 3.

There are further provided means for moving the platform 3, intended to move away/to approach the platform 3 with respect to the bottom of the vat 1, such to form the next layers of cured material.

The platform 3 is placed at a distance from the bottom of the vat 1 equal to the thickness of the layer of the resin 11 to be cured.

The light radiation generating source 2 generates a light radiation 21 irradiating the resin layer comprised between the bottom of the vat 1 and the adhesion platform 3.

For each resin layer 11 which is built, the light radiation 21 is different and it is obtained by the different sections of the image of the object desired to be made, such that each resin layer 11 corresponds to a section of the image.

The resin 11, subjected to the radiation, cures and solidifies, generating the first layer of the object to be made.

Now the platform 3 moves away from the bottom of the vat 1, such to detach the layer just made from the bottom of the vat 1.

The resin layer 11 just made is placed at a distance from the bottom of the vat 1 equal to the thickness of the next resin layer 11 to be cured and so on till completely building the object to be created.

The speed with which the platform 3 moves away/approaches is variable and it does not take null values.

Moreover such speed is calculated on the basis of the amount of resin 11 to be cured and on the basis of the size of the resin layer to be cured.

Preferably the size of the resin layer 11 to be cured is calculated on the basis of the presence of solid and empty resin areas inside said layer.

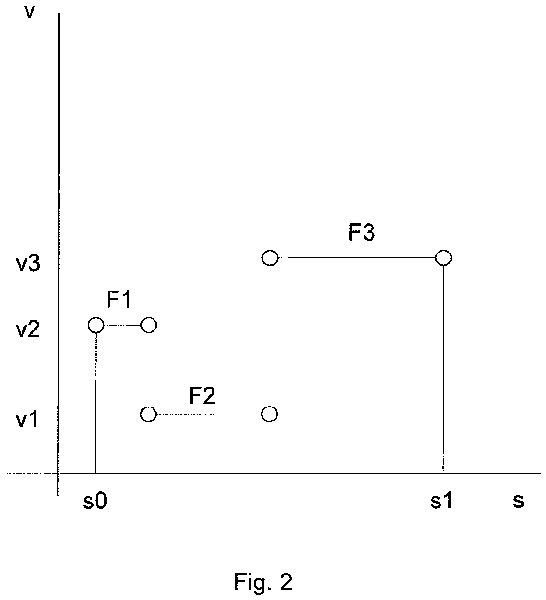

According to the invention the stereolithography device shown in figure 1 allows a method for producing objects to be carried out wherein the step previously described and regarding the platform 3 that moves away and the resin layer 11 just made that is detached from the bottom of the vat 1 provides the following steps, which are shown in figure 2 and that will be described below:
c1) first moving away of the platform 3 with respect to the bottom of the vat 1,
c2) second moving away of the platform 3 with respect to the bottom of the vat 1,
c3) approaching of the platform 3 with respect to the bottom of the vat 1 for forming the next layer.

The passage from one step to another one is obtained by changing the speed with which the platform 3 moves away/approaches with respect to the bottom of the vat 1, the platform 3 being kept in movement during all the three steps.

The step c1 denotes that at the beginning of the process the platform 3 is immediately moved away from the bottom of the vat 1, such that the resin 11 is pretensioned.

Step c3 relates to the formation of the cured resin layer 11 following the first one, obviously steps c1 to c3 will be repeated till forming all the layers, that is till achieving the finished object.

As said above, the speed with which the platform 3 moves away/approaches in steps c1 to c3 can be calculated on the basis of several parameters.

For example it can be calculated on the basis of the amount of resin 11 to be cured and on the basis of the presence of solid and empty resin areas inside the layer under formation step by step.

Preferably the calculation is made via software, therefore according to a possible embodiment the stereolithography device provides an electronic control unit comprising processing means for executing a logic program, whose execution causes the stereolithography device to operate by performing the method steps described above and shown below.

As a further improvement of the method of the present invention it is possible for the software to perform evaluations about the formation of cavities inside the resin layer 11, which can lead to suction effects and that require a greater force for detaching the resin 11 from the bottom of the vat 1.

Advantageously the calculation of the moving away/approach speed of steps c1 to c3 is made before the formation of the layer of interest.

The speed of the platform 3 changes layer by layer: for example in the first layers the base of the object is made, which supports all the parts that will be made later. The layers included in the base on average are the widest area and have a higher adhesion level, due to the greater backing amount to which the resin 11 is subjected.

In this step the adhesion of the layer to the vat 1 is very high.

Figure 2 shows a chart of the steps just described.

The abscissas of the chart show the displacement of the platform 3 and the ordinates show the speed with which the platform 3 moves away/approaches with respect to the bottom of the vat 1.

Basically step c1) corresponds to a pre-tensioning of the resin layer 11, step c2) corresponds to the detachment of the resin layer from the bottom of the vat 1, and step c3) corresponds to the repositioning of the platform 3 for forming the next layer.

With a particular reference to the chart of figure 2:
S0 denotes the position of the platform 3 at the beginning of the displacement
S1 denotes the position of the platform 3 for the new layer formation.
v2 is the pre-tensioning speed
v1 is the detachment speed
v3 is the repositioning speed
F1 is the pre-tensioning step
F2 is the detachment step
F3 is the repositioning step.

The first step is the pre-tensioning one, wherein a movement is made at a specific speed, pre-tensioning speed, without creating problems to the material.

Such step is particularly advantageous in combination with the bending of the platform 3, since the platform 3 has an elastic yielding property in the lifting movement that follows the material layer without causing sudden sharp movements.

Then there is the detachment step wherein the cured resin begins to detach from the vat and therefore the displacement will be very slow and gradual.

Preferably the detachment speed is lower than the pre-tensioning speed, but it provides a greater displacement.

Finally there is the repositioning step wherein all the resin is intended as detached from the vat and therefore the displacement is intended for improving the flow of the resin that will cover completely the bottom of the vat and the platform will be repositioned for the next layer formation, re-positioning speed.

This system provides 3 moments wherein the displacement speed changes.

It is specified that preferably the speed is the only component that changes during the displacement of the platform 3, but there are no pauses and therefore moments when the platform is kept still.

Moreover it is specified that in the chart of figure 2 all the speeds have been denoted as constants, but such speeds can also change during the whole process, and during the formation of a single layer.

As described above there are several parameters that can be used by the algorithm for calculating the moving away/approach speed.

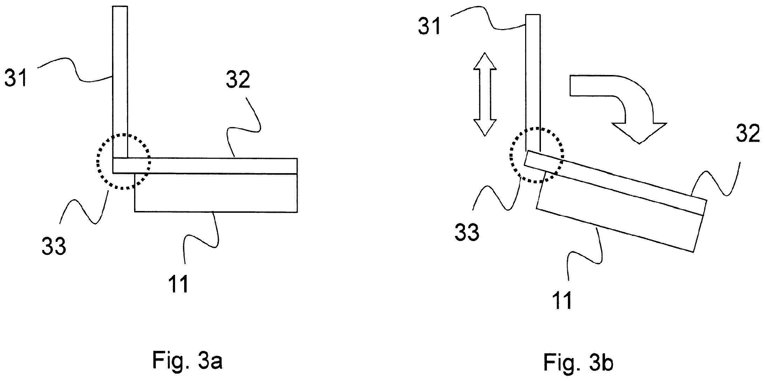

Figures 3a and 3b show the embodiment of the adhesion platform 3 intended to improve the detachment of the cured resin 11 from the bottom of the vat 1. The platform 3 is supported by elastically yielding supporting means, such that the platform 3 has a yielding property in the lifting direction according to a specific force.

Preferably the supporting means are composed of the material of the platform 3.

As shown in figures 3a and 3b the platform 3 is composed of two elongated members arranged so as to form a "L", of which a first elongated member 31 arranged with its own longitudinal axis in a direction substantially perpendicular to the vat 1 and a second elongated member 32 arranged with its own longitudinal axis in a direction substantially parallel to the vat 1.

Such as shown in figures 3a and 3b the resin layer 11 is attached to the second elongated member 32.

The "L" shape is intended to create a bending point 33 at the corner area of the "L" component.

The particular shape and thickness of the material characterizing the "L" component allow a specific flexibility thereof to be obtained, particularly they allow the bending point 33 shown in figure 3a to be generated.

It is specified that the two elongated members 31 and 32 can make a single integral component, that is a single one-piece component bent such to identify a first 31 and a second 32 elongated members.

As an alternative the first elongated member and the second elongated member can be two separate and distinct pieces, joined by any methods known in the prior art, such to create a "L" and such that the joint therebetween has an elastic yielding property to define the bending point 33.

Preferably only one or both the members 31 and 32 can be composed of an elastically deformable material.

The arrangement of the platform 3 just described obviously has an advantageous aspect in combination with the method of the present invention, since the detachment of the cured resin layer 11 occurs by a bending of the platform 3, such that the cured resin layer 11 begins to be detached from the bottom of the vat 1 in the area closest to the bending point 33.

The bending is of the passive type, that is caused by the platform 3 moving away from the bottom of the vat 1.

Preferably the elongated member 31 is connected to the means moving the platform 3 and it is integral with such movement, when the platform 3 moves away the member 32 is engaged to the bottom of the vat 1 by the resin layer 11, therefore it tends to bend and the area where the moving away of the platform 3 creates the highest dragging force on the resin layer 11 is the area at the bending point 33.

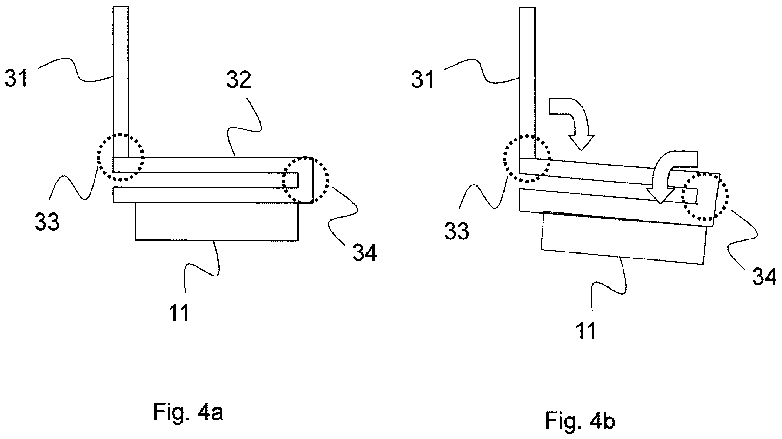

Such effect can be obtained also by a different embodiment of the platform 3, which is shown in figures 4a and 4b.

According to such embodiment, the second elongated member 33 is folded on itself, with a bending angle of 180°.

Such arrangement allows two bending points 33 and 34 to be obtained, such that the resin layer 11 begins to be detached from the bottom of the vat also at the bending point 34.

According to a further improvement, the method of the present invention provides the light radiation impressed on the resin 11 to be made homogeneous.

Accordingly the step generating the light radiation provides the following steps:
b1) detecting the light intensity in specific areas
b2) interpolating the detected values
b3) making the intensity of the light radiation homogeneous in the projection area.

Preferably the light intensity in some areas is detected and a surface is generated by interpolating the value detected in these areas for each pixel to be applied to the images, such to allow the required light uniformity.

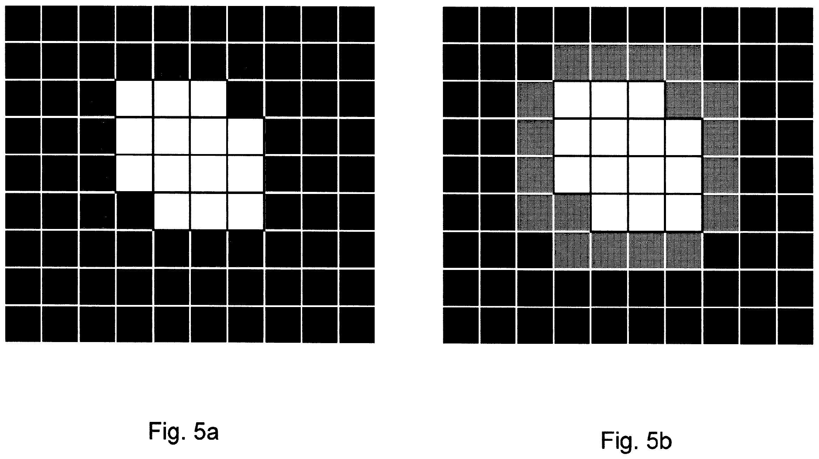

Figures 5a and 5b show a possible embodiment of the method of the present invention, particularly providing a change in the projected image.

Such change provides the following steps:
antialiasing the image,
detecting the pixels having grey values lower than the threshold values activating the curing,
increasing the grey value of said pixels to the value activating the curing,
increasing the grey value of the remaining pixels in a way corresponding to the increase in the previous step.

As it has been described above the projected image is a section of the image of the object desired to be built, therefore it is composed of a 2D image.

In 2D graphics in order to improve the quality of an image without increasing the resolution of the images several techniques are used among which antialiasing that is the interpolation of the boundaries of the figures by using grey scales according to different algorithms.

The image shown in figure 5a is the image on which antialiasing has been carried out.

The method of the present invention, starting from the image of figure 5a, detects the image pixel by pixel, and when it meets a grey value that is below the minimum threshold for the activation of the curing of the resin 11 it brings the pixel to such minimum value. All the pixels that have a value greater than the minimum value are accordingly rescaled.

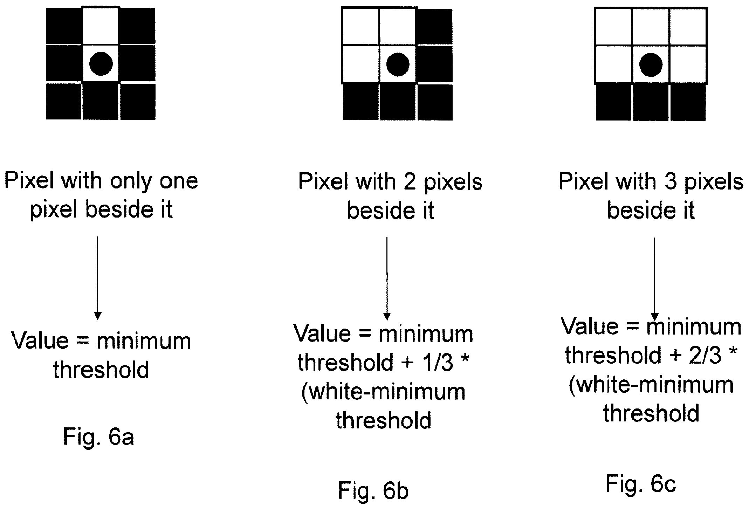

Finally figures 6a to 6c show a further variant embodiment of the method of the present invention, particularly for black-and-white images, that is where pixels do not have grey levels, it provides to change the projected image according to the following steps:
extracting the borders of the image,
analyzing at least one pixel belonging to said borders,
setting the grey value of said at least one pixel depending on the number of pixels placed beside it,
iteration for each pixel composing the border.

Even in this case a threshold is established for the activation of the curing, that is a base grey level and a function is established such to adjust the level of grey to be assigned to the pixel under examination, shown by a black ball in figures 6a to 6c.

Preferably the used function provides the following rule:
if the pixel under examination has only one pixel beside it, then its grey value is equal to the threshold value activating the curing,
if the pixel under examination has two pixels beside it, then its grey value is equal to the threshold value activating the curing + 1/3 of the difference between the grey value corresponding to the white and the threshold value activating the curing,
if the pixel under examination has three pixels beside it, then its grey value is equal to the threshold value activating the curing + 2/3 of the difference between the grey value corresponding to the white and the threshold value activating the curing.

## Claims

1. Method for producing objects by a stereolithography device, which device comprises at least one vat (1) inside which there is provided a resin (11) intended to be solidified by a curing process, by projecting an image obtained by a light radiation (21) on the bottom of said vat (1), generated by a source (2) arranged under said vat (1),
there being provided an adhesion platform (3) placed in contact with said resin (11), such to form a first layer of cured material adherent to said platform (3),
there being further provided means for moving said platform (3), intended to move away/to approach said platform (3) with respect to the bottom of the vat (1), such to form the following layers of cured material,
which method provides the following steps:
a) placing said platform (3) at a distance from the bottom of said vat (1) equal to the thickness of the layer of the resin (11) to be cured,
b) generating the light radiation, irradiating the resin (11) with it and consequently curing the layer of said resin (11),
c) moving away said platform (3) from the bottom of said vat (1) and detaching the layer of cured resin (11) from the bottom of said vat (1)
d) forming the following layer of cured resin (11), wherein
the speed with which said platform (3) moves away/approaches is variable and it does not take null values,
said speed being calculated depending on the amount of resin (11) to be cured and depending on the size of the resin layer (11) to be cured;
**characterized in that** the step c) of moving away said platform (3) provides three steps:
c1) first moving away of said platform (3) with respect to the bottom of the vat (1),
c2) second moving away of said platform (3) with respect to the bottom of the vat (1),
c3) approaching said platform (3) with respect to the bottom of the vat (1) for forming the next layer,
the passage from one step to another one is obtained by changing the speed with which the platform (3) moves away from/approaches the bottom of the vat (1),
the platform (3) being kept in movement during all the three steps, and **in that** step c1) of the first moving away of the platform (3) provides a bending of said platform (3) about a bending point, such that said layer of cured resin (11) begins to be detached from the bottom of said vat (1) in the region nearest said bending point,
said bending being caused by moving said platform (3) away with respect to the bottom of said vat (1);
said platform (3) being supported by elastically yielding supporting means, such that said platform has a yielding property in the lifting direction according to a predetermined force and **in that**
said platform (3) is composed of at least two elongated members (31, 32) arranged such to form a "L", of which a first elongated member (31) arranged in a direction substantially perpendicular to said vat (1) and a second elongated member (32) arranged in a direction substantially parallel to said vat (1), to which second elongated member the layer of cured resin (11) is attached, said platform (3) providing at least one bending point in the proximity of the corner area of said "L".

2. Method according to claim 1, wherein the speed with which the platform (3) moves away/approaches is calculated depending on the presence of solid areas and empty areas of the resin (11) inside said layer.

3. Method according to claim 1 or 2, wherein the speed with which the platform (3) moves away/approaches is calculated on the basis of the distribution on said layer of said solid areas and of said empty areas.

4. Method according to one or more of the preceding claims, wherein the speed with which the platform (3) moves away/approaches the bottom of the vat (1) is calculated on the basis of the characteristics of the light radiation emitted and/or of the characteristics of the resin to be cured and/or of the characteristics of the platform (3) and/or of the characteristics of the projected image.

5. Method according to one or more of the preceding claims, wherein step b) generating the light radiation provides the following steps:
b1) detecting the light intensity in specific areas
b2) interpolating the detected values
b3) making the intensity of the light radiation homogeneous in the projection area.

6. Method according to one or more of the preceding claims, wherein there is provided to change said projected image according to the following steps:
antialiasing the image,
detecting the pixels having grey values lower than the threshold values activating the curing,
increasing the grey value of said pixels to the value activating the curing,
increasing the grey value of the remaining pixels in a way corresponding to the increase in the previous step.

7. Method according to one or more of the preceding claims 1 to 5, wherein there is provided to change said projected image according to the following steps:
extracting the borders of said image,
analyzing at least one pixel belonging to said borders,
setting the grey value of said at least one pixel depending on the number of pixels placed beside it,
iteration for each pixel composing the border.

8. Stereolithography device comprising at least one vat (1) inside which there is provided a resin (11) intended to be solidified by a curing process, by projecting an image obtained by a light radiation on the bottom of said vat (1), generated by a source (2) generating a light radiation arranged under said vat (1),
there being provided an adhesion platform (3) placed in contact with said resin (11), such to form a first layer of cured material adherent to said platform (3),
there being further provided means for moving said platform (3), intended to move away/to approach said platform (3) with respect to the bottom of the vat (1), such to form the following layers of cured material,
there being further provided an electronic control unit intended to monitor the operation of said moving means and of said source (2) generating a light radiation,
**characterized in that**
said adhesion platform (3) is supported by elastically yielding supporting means, such that said platform has a yielding property in the lifting direction according to a predetermined force;
and wherein said platform (3) is composed of at least two elongated members (31, 32) arranged such to form a "L", of which a first elongated member (31) arranged in a direction substantially perpendicular to said vat (1) and a second elongated member (32) arranged in a direction substantially parallel to said vat (1), to which second elongated member the layer of cured resin (11) is attached, said platform (3) providing at least one bending point in the proximity of the corner area of said "L".

9. Device according to claim 8, wherein said supporting means are composed of the material of the platform (3).

10. Device according to claim 9, wherein the first elongated member (31) is made integral with the second elongated member (32).

11. Stereolithography device according to claim 9, wherein the second elongated member (32) is folded on itself.

12. Stereolithography device according to claim 8, wherein said electronic control unit comprises processing means for executing a logic programme, whose execution implies the stereolithography device to operate by performing the method steps according to one or more of the claims 1 to 5.

## Patentansprüche

1. Verfahren zur Herstellung von Gegenständen durch eine Stereolithographievorrichtung, die mindestens eine Wanne (1) aufweist, in der ein Harz (11) vorgesehen ist, das durch einen Aushärteprozess verfestigt werden soll, durch Projizieren eines durch eine Lichtstrahlung (21) auf dem Boden der Wanne (1) erhaltenen Bildes, erzeugt durch eine unter der Wanne (1) angeordnete Quelle (2), wobei eine Haftungsplattform (3) vorgesehen ist, die in Kontakt mit dem Harz (11) angeordnet ist, so dass eine erste Schicht aus gehärtetem Material gebildet wird, das an der Plattform (3) haftet, wobei ferner Mittel zum Bewegen der Plattform (3) vorgesehen sind, die dazu bestimmt sind, sich von oder in Richtung auf die Plattform (3) in Bezug auf den Boden der Wanne (1) zu bewegen, so dass die folgenden Schichten aus gehärtetem Material gebildet werden, wobei das Verfahren die folgenden Schritte bereitstellt:
a) Platzieren der Plattform (3) in einem Abstand von der Unterseite der Wanne (1) gleich der Dicke der Schicht des zu härtenden Harzes (11),
b) Erzeugen der Lichtstrahlung, Bestrahlen des Harzes (11) mit dieser und folglich Aushärten der Schicht des Harzes (11),
c) Wegbewegen der Plattform (3) von der Unterseite der Wanne (1) und Lösen der Schicht aus gehärtetem Harz (11) von der Unterseite der Wanne (1)
d) Bilden der folgenden Schicht aus gehärtetem Harz (11), wobei die Geschwindigkeit, mit der sich die Plattform (3) wegbewegt/annähert, variabel ist und keine Nullwerte annimmt,
wobei die Geschwindigkeit in Abhängigkeit von der zu härtenden Harzmenge (11) und in Abhängigkeit von der Größe der zu härtenden Harzschicht (11) berechnet wird, **dadurch gekennzeichnet, dass** der Schritt c) des Wegbewegens der Plattform (3) drei Schritte vorsieht:
Cl) erstes Wegbewegen der Plattform (3) in Bezug auf den Boden der Wanne (1),
C2) zweites Wegbewegen der Plattform (3) in Bezug auf den Boden der Wanne (1),
C3) Annähern in Richtung auf die Plattform (3) in Bezug auf den Boden der Wanne (1) zur Bildung der nächsten Schicht, wobei der Übergang von einem Schritt zu einem anderen durch Ändern der Geschwindigkeit, mit der sich die Plattform (3) relativ zum Boden der Wanne (1) wegbewegt/nähert, wobei die Plattform (3) während aller drei Schritte in Bewegung gehalten wird, und dass Schritt C1) des ersten Wegbewegens der Plattform (3) eine Biegung der Plattform (3) um eine Biegestelle bereitstellt, so dass die Schicht aus gehärtetem Harz (11) beginnt, sich von der Unterseite der Wanne (1) in dem Bereich am nächsten zu dem Biegepunkt zu lösen, wobei die Biegung durch Wegbewegen der Plattform (3) in Bezug auf den Boden der Wanne (1) verursacht wird; wobei die Plattform (3) durch elastisch nachgiebige Stützmittel abgestützt ist, so dass die Plattform eine nachgiebige Eigenschaft in Hubrichtung entsprechend einer vorgegebenen kraft aufweist und dass die Plattform (3) aus mindestens zwei länglichen Elementen (31, 32) zusammengesetzt ist, die so angeordnet sind, dass sie ein "L" bilden, von denen ein erstes längliches Element (31) in einer Richtung im Wesentlichen senkrecht zu der Wanne (1) angeordnet ist, und ein zweites längliches Element (32) in einer Richtung im Wesentlichen parallel zu der Wanne (1) angeordnet ist und an dem die Schicht aus gehärtetem Harz (11) befestigt ist, wobei die Plattform (3) mindestens einen Biegepunkt in der Nähe des Eckbereichs des "L" bereitstellt.

2. Verfahren nach Anspruch 1, wobei die Geschwindigkeit, mit der sich die Plattform (3) wegbewegt/annähert, in Abhängigkeit von der Anwesenheit von festen Bereichen und leeren Bereichen des Harzes (11) innerhalb der Schicht berechnet wird.

3. Verfahren nach Anspruch 1 oder 2, wobei die Geschwindigkeit, mit der sich die Plattform (3) wegbewegt/annähert, auf der Grundlage der Verteilung auf der Schicht der festen Bereiche und der leeren Bereiche berechnet wird.

4. Verfahren nach einem oder mehreren der vorhergehenden Ansprüche, wobei die Geschwindigkeit, mit der sich die Plattform (3) dem Boden der Wanne (1) wegbewegt/annähert, anhand der Eigenschaften der emittierten Lichtstrahlung und/oder der Eigenschaften des auszuhärtenden Harzes und/oder der Eigenschaften der Plattform (3) und/oder der Eigenschaften des projizierten Bildes berechnet wird.

5. Verfahren nach einem oder mehreren der vorhergehenden Ansprüche, wobei Schritt b) des Erzeugens der Lichtstrahlung folgende Schritte vorsieht:
b1) Erfassen der Lichtintensität in bestimmten Bereichen
b2) Interpolieren der erfassten Werte
b3) Erzeugen der Intensität der im Projektionsbereich homogenen Lichtstrahlung.

6. Verfahren nach einem oder mehreren der vorhergehenden Ansprüche, wobei vorgesehen ist, das projizierte Bild gemäß den folgenden Schritten zu ändern: Antialiasing des Bildes, Erfassen der Pixel mit Grauwerten, die niedriger sind als die Schwellenwerte, die das Härten aktivieren, Erhöhen des Grauwerts der Pixel auf den Wert, der die Härtung aktiviert, Erhöhen des Grauwerts der verbleibenden Pixel auf eine Weise, die der Erhöhung in dem vorherigen Schritt entspricht.

7. Verfahren nach einem oder mehreren der vorhergehenden Ansprüche 1 bis 5, wobei vorgesehen ist, das projizierte Bild gemäß den folgenden Schritten zu ändern: Extrahieren der Ränder des Bildes, Analysieren mindestens eines zu den Rändern gehörigen Pixels, Einstellen des Grauwerts des mindestens einen Pixels in Abhängigkeit von der Anzahl der daneben angeordneten Pixel, Iteration für jedes den Rand bildende Pixel.

8. Stereolithographievorrichtung mit mindestens einer Wanne (1), in dem ein Harz (11) vorgesehen ist, das durch einen Härtungsprozess verfestigt werden soll, durch Projizieren eines Bildes, das durch eine Lichtstrahlung auf dem Boden der Wanne (1) erhalten wird, erzeugt durch eine eine Lichtstrahlung erzeugende Quelle (2), die unter der Wanne (1) angeordnet ist, wobei eine Haftungsplattform (3) vorgesehen ist, die in Kontakt mit dem Harz (11) angeordnet ist, so dass eine erste Schicht aus gehärtetem Material gebildet wird, die an der Plattform (3) haftet, wobei ferner Mittel zum Bewegen der Plattform (3) vorgesehen sind, die dazu bestimmt sind, sich von oder in Richtung auf die Plattform (3) in Bezug auf den Boden der Wanne (1) zu bewegen, so dass die folgenden Schichten aus gehärtetem Material gebildet werden, wobei ferner eine elektronische Steuereinheit vorgesehen ist, die dazu bestimmt ist, den Betrieb der Bewegungsmittel und der Quelle (2) zum Erzeugen einer Lichtstrahlung zu überwachen, **dadurch gekennzeichnet, dass** die Haftplattform (3) durch elastisch nachgiebige Stützmittel abgestützt ist, so dass die Plattform in Hubrichtung eine nachgiebige Eigenschaft gemäß einer vorbestimmten Kraft aufweist; und wobei die Plattform (3) aus mindestens zwei länglichen Elementen (31, 32) zusammengesetzt ist, die so angeordnet sind, dass sie ein "L" bilden, von denen ein erstes längliches Element (31) in einer Richtung im Wesentlichen senkrecht zu der Wanne (1) angeordnet ist und ein zweites längliches Element (32) in einer Richtung im Wesentlichen parallel zu der Wanne (1) angeordnet ist und auf dem zweiten länglichen Element die Schicht aus gehärtetem Harz (11) angebracht ist, wobei die Plattform (3) mindestens einen Biegepunkt in der Nähe des Eckbereichs des "L" bereitstellt.

9. Vorrichtung nach Anspruch 8, wobei die Stützmittel aus dem Material der Plattform (3) bestehen.

10. Vorrichtung nach Anspruch 9, wobei das erste längliche Element (31) einstückig mit dem zweiten länglichen Element (32) ausgebildet ist.

11. Stereolithographievorrichtung nach Anspruch 9, wobei das zweite längliche Element (32) auf sich selbst gefaltet ist.

12. Stereolithographievorrichtung nach Anspruch 8, wobei die elektronische Steuereinheit Verarbeitungsmittel zum Ausführen eines Logikprogramms umfasst, deren Ausführung die Stereolithographievorrichtung veranlasst, die Verfahrensschritte gemäß einem oder mehreren der Ansprüche 1 bis 5 auszuführen.

## Revendications

1. Méthode pour produire des objets par un dispositif de stéréolithographie, le dispositif comprenant au moins une cuve (1) à l'intérieur de laquelle est prévue une résine (11) destinée à être solidifiée par un procédé de polymérisation, en projetant une image obtenue par un rayonnement lumineux (21) sur le fond de ladite cuve (1), généré par une source (2) disposée sous ladite cuve (1),
étant prévue une plate-forme d'adhésion (3) placée en contact avec ladite résine (11), de manière à former une première couche de matériau polymérisé adhérant à ladite plate-forme (3), étant en outre prévus des moyens pour déplacer ladite plate-forme (3), destinés à éloigner/approcher ladite plate-forme (3) par rapport au fond de la cuve (1), de manière à former les couches suivantes de matériau polymérisé,
le procédé prévoyant les étapes suivantes:
a) placer ladite plate-forme (3) à une distance du fond de ladite cuve (1) égale à l'épaisseur de la couche de résine (11) à polymériser,
b) générer le rayonnement lumineux, irradier la résine (11) avec celui-ci et par conséquent polymériser la couche de ladite résine (11),
c) éloigner ladite plate-forme (3) du fond de ladite cuve (1) et détacher la couche de résine polymérisée (11) du fond de ladite cuve (1)
d) former la couche suivante de résine polymérisée (11), où
la vitesse à laquelle ladite plate-forme (3) s'éloigne/approche est variable et ne prend pas de valeurs nulles,
ladite vitesse étant calculée en fonction de la quantité de résine (11) à polymériser et en fonction de la taille de la couche de résine (11) à polymériser;
**caractérisée en ce que**
l'étape c) de l'éloigner ladite plate-forme (3)
prévoit trois étapes:
c1) premier éloignement de ladite plate-forme (3) par rapport au fond de la cuve (1),
c2) deuxième éloignement de ladite plate-forme (3) par rapport au fond de la cuve (1),
c3) approcher ladite plate-forme (3) par rapport au fond de la cuve (1) pour former la couche suivante,
le passage d'une étape à l'autre est obtenu en modifiant la vitesse à laquelle la plate-forme (3) s'éloigne/approche du fond de la cuve (1),
la plate-forme (3) étant maintenue en mouvement pendant les trois étapes, et que
l'étape c1) du premier éloignement de la plate-forme (3) provoque une flexion de ladite plate-forme (3) autour d'un point de flexion, de sorte que ladite couche de résine polymérisée (11) commence à se détacher du fond de ladite cuve (1) dans la région la plus proche dudit point de flexion,
ladite flexion étant provoquée par ladite plate-forme (3) s'éloignant par rapport au fond de ladite cuve (1);
ladite plate-forme (3) étant supportée par des moyens de support élastiquement déformable, de sorte que ladite plate-forme ait une propriété de déformation dans la direction de levage selon une force prédéterminée et que
ladite plate-forme (3) est composée d'au moins deux éléments allongés (31, 32) disposés de manière à former un "L", dont un premier élément allongé (31) disposé dans une direction sensiblement perpendiculaire à ladite cuve (1) et un deuxième élément allongé (32) disposé dans une direction sensiblement parallèle à ladite cuve (1), la couche de résine polymérisée (11) étant fixée au deuxième élément allongé, ladite plate-forme (3) prévoyant au moins un point de flexion à proximité de la zone d'angle dudit "L".

2. Méthode selon la revendication 1, dans laquelle la vitesse à laquelle la plate-forme (3) s'éloigne/approche est calculée en fonction de la présence de zones solides et de zones vides de la résine (11) à l'intérieur de ladite couche.

3. Méthode selon la revendication 1 ou 2, dans laquelle la vitesse à laquelle la plate-forme (3) s'éloigne/approche est calculée sur la base de la répartition sur ladite couche desdites zones solides et desdites zones vides.

4. Méthode selon une ou plusieurs des revendications précédentes, dans laquelle la vitesse à laquelle la plate-forme (3) s'éloigne/approche du fond de la cuve (1) est calculée sur la base des caractéristiques du rayonnement lumineux émis et/ou des caractéristiques de la résine à polymériser et/ou des caractéristiques de la plate-forme (3) et/ou des caractéristiques de l'image projetée.

5. Méthode selon une ou plusieurs des revendications précédentes, dans laquelle l'étape b) de générer le rayonnement lumineux prévoit les étapes suivantes:
b1) détecter l'intensité lumineuse dans des zones spécifiques
b2) interpoler les valeurs détectées
b3) rendre l'intensité du rayonnement lumineux homogène dans la zone de projection.

6. Méthode selon une ou plusieurs des revendications précédentes, dans laquelle il est prévu de modifier ladite image projetée selon les étapes suivantes:
anticréneler l'image, détecter les pixels dont les valeurs de gris sont inférieures aux valeurs de seuil activant la polymérisation,
augmenter la valeur de gris desdits pixels à la valeur activant la polymérisation,
augmenter la valeur de gris des pixels restants d'une manière correspondant à l'augmentation de l'étape précédente.

7. Méthode selon une ou plusieurs des revendications précédentes 1 à 5, dans laquelle il est prévu de modifier ladite image projetée selon les étapes suivantes:
extraire les bordures de ladite image, analyser au moins un pixel appartenant à ces bordures,
fixer la valeur de gris dudit au moins un pixel en fonction du nombre de pixels placés à côté de celui-ci, itérer pour chaque pixel composant la bordure.

8. Dispositif de stéréolithographie comprenant au moins une cuve (1) à l'intérieur de laquelle est prévue une résine (11) destinée à être solidifiée par un procédé de polymérisation, en projetant une image obtenue par un rayonnement lumineux sur le fond de ladite cuve (1), généré par une source (2) qui génère un rayonnement lumineux disposé sous ladite cuve (1),
il est prévu une plate-forme d'adhésion (3) placée en contact avec ladite résine (11), de manière à former une première couche de matériau polymérisé adhérant à ladite plate-forme (3),
étant prévus des moyens supplémentaires pour déplacer ladite plate-forme (3), destinés à éloigner/approcher ladite plate-forme (3) par rapport au fond de la cuve (1), de manière à former les couches suivantes de matériau polymérisé,
il est en outre prévu une unité de commande électronique destinée à surveiller le fonctionnement desdits moyens de déplacement et de ladite source (2) générant un rayonnement lumineux,
**caractérisé en ce que**
ladite plate-forme d'adhésion (3) est supportée par des moyens de support élastiquement déformable, de sorte que ladite plate-forme ait une propriété de déformation dans la direction de levage selon une force prédéterminée;
et où ladite plate-forme (3) est composée d'au moins deux éléments allongés (31, 32) disposés de manière à former un "L", dont un premier élément allongé (31) disposé dans une direction sensiblement perpendiculaire à ladite cuve (1) et un deuxième élément allongé (32) disposé dans une direction sensiblement parallèle à ladite cuve (1), la couche de résine polymérisée (11) étant fixée au deuxième élément allongé, ladite plate-forme (3) prévoyant au moins un point de flexion à proximité de la zone d'angle dudit "L".

9. Dispositif selon la revendication 8, dans lequel lesdits moyens de support sont composés du matériau de la plate-forme (3).

10. Dispositif selon la revendication 9, dans lequel le premier élément allongé (31) est rendu solidaire du deuxième élément allongé (32) .

11. Dispositif de stéréolithographie selon la revendication 9, dans lequel le deuxième élément allongé (32) est replié sur lui-même.

12. Dispositif de stéréolithographie selon la revendication 8, dans lequel ladite unité de commande électronique comprend des moyens de traitement pour exécuter un programme logique, dont l'exécution implique que le dispositif de stéréolithographie fonctionne en exécutant les étapes de la méthode selon une ou plusieurs des revendications 1 à 5.
